# FASCICULE DE BREVET EUROPEEN

(11) **EP 0 605 313 B1**
(45) Date de publication et mention de la délivrance du brevet: **11.09.1996**
(21) Numéro de dépôt: 93403178.2
(22) Date de dépôt: 27.12.1993
(51) Int. Cl.: G07B 17/02

(54) **Machine à affranchir permettant de mémoriser un historique**
Frankiermaschine mit Geschichtsabspeicherung
Franking machine with history recording

(30) Priorité: 30.12.1992 FR 9215933
(43) Date de publication de la demande: 06.07.1994
(73) Titulaire: NEOPOST INDUSTRIE, F-92220 Bagneux (FR)
(72) Inventeur: Vermesse, Bernard, F-94240 L'Hay Les Roses (FR)
(74) Mandataire: Joly, Jean-Jacques

(56) Documents cités:
- EP-A- 0 172 573
- EP-A- 0 173 249
- EP-A- 0 328 059
- EP-A- 0 376 487
- EP-A- 0 392 895
- EP-A- 0 493 948
- FR-A- 2 620 249
- FR-A- 2 665 003
- IBM TECHNICAL DISCLOSURE BULLETIN., vol.25, no.11B, Avril 1983, NEW YORK, US, pages 6177 - 6178; AIDHELMANN: 'Overlapped store back'
- TWENTY-THIRD ASILOMAR CONFERENCE ON SIGNALS, SYSTEMS & COMPUTERS, vol.2, 30 Octobre 1989, PACIFIC GROVE, CALIFORNIA, USA, pages 965 - 969; TSAO E.A.: 'Flash EEPROM role in NVM applications & technology'

## Description

L'invention concerne une machine à affranchir permettant de mémoriser un historique, cet historique décrivant les caractéristiques de chaque opération d'affranchissement réalisée au moyen de cette machine. Un historique permet d'envisager plusieurs applications, notamment: l'établissement de statistiques, une comptabilité par département d'une société, une comptabilité par organisme postal, etc......

Il est souhaitable que les machines à affranchir permettent d'établir des statistiques pour les organismes postaux qui exploitent ces machines. S'ils connaissaient les caractéristiques de chaque opération d'affranchissement, ils pourraient avoir une meilleure connaissance statistique du trafic postal engendré par les machines à affranchir : par exemple, le nombre de plis émis dans telle ou telle tranche de valeur d'affranchissement, pendant telle période donnée de l'année.

Dans certains pays, il existe plusieurs organismes postaux. Ils pourraient utiliser les mêmes machines à affranchir, mais celles-ci devraient alors permettre d'établir des comptes séparées pour chaque organisme.

Les usagers sont généralement des sociétés comportant plusieurs départements ayant chacun une comptabilité séparée pour les affranchissements, mais ayant une seule machine à affranchir qui est commune. Il est alors souhaitable de pouvoir établir des comptes en distinguant les opérations d'affranchissement département par département.

Il est envisageable d'appliquer une taxe, à la valeur ajoutée, différente selon le type d'envoi, ou bien d'offrir aux usagers une ristourne différente par type d'envoi. Dans ces cas aussi, il est souhaitable de pouvoir établir des comptes en distinguant différents types d'envoi.

Pour permettre toutes ces applications il est nécessaire de disposer d'un grand nombre de caractéristiques pour chaque opération d'affranchissement, sur une longue période. Classiquement, la principale source d'informations utilisée par les organismes postaux est constituée par un formulaire mensuel comportant une ligne par journée. L'usager inscrit, en fin de journée, le montant total des affranchissements affiché par un compteur perpétuel dit ascendant. L'usager calcule le montant de la journée en sous trayant le montant de la journée précédente au montant total; puis il l'inscrit sur le formulaire.

Ces informations sont trop succinctes pour établir des comptes ou des statistiques détaillées et, d'autre part, elles ne sont pas assez fiables car beaucoup d'usagers ne remplissent pas sérieusement chaque ligne du formulaire.

Par ailleurs, les machines à affranchir classiques ne sont pas capables de fournir une telle quantité d'informations. Une machine à affranchir classique comporte deux mémoires secourues par des batteries, et ayant une faible capacité destinée à stocker principalement le montant total des opérations d'affranchissement réalisées. Chacune de ces mémoires stocke ce montant total pour lui assurer une grande sécurité.

La demande de brevet français n°2 665 003 décrit une machine à affranchir permettant d'établir un histogramme des nombres d'opérations d'affranchissement en prenant pour abscisse neuf valeurs d'affranchissement prédéterminées. Elle compte en outre le nombre d'opérations pour toutes les autres valeurs. Ceci est réalisé au moyen de dix compteurs. Les changements de tarif posent un sérieux problème, car il n'est pas possible au personnel des organismes postaux d'intervenir sur l'ensemble du parc de machines à affranchir, précisément le jour de chaque changement de tarif. La demande de brevet français n° 2 665 003 propose une solution consistant à prédéterminer les neuf valeurs à surveiller en mémorisant les neuf premières valeurs distinctes utilisées pour les premières opérations d'affranchissement réalisées après une opération de rechargement de crédit, dans le cas d'une machine à prépaiement. Il s'agit donc d'une sorte d'apprentissage.

Un inconvénient de cet apprentissage consiste en ce qu'une ou plusieurs valeurs fantaisistes peuvent être prises comme abscisse de l'histogramme si l'utilisateur commet des erreurs dans le choix des neuf premières valeurs d'affranchissement distinctes.

Un autre procédé d'établissement de statistiques peut consister à mémoriser les caractéristiques de chaque opération, notamment sa date et sa valeur, et à ne faire un traitement statistique, tel que l'établissement d'un histogramme, qu'au moment de la lecture de ces informations. Il est alors possible de prendre en compte un tarif exact pour chaque opération. La demande de brevet français n° 2 620 249 décrit une machine à affranchir comportant un circuit calendrier et une mémoire non volatile pour mémoriser le contenu du compteur ascendant et la date, pour chaque journée où la machine a fonctionné, ainsi que la consommation mensuelle pour une période de deux mois. Pour pouvoir établir des statistiques, la connaissance de la consommation journalière et de la date sont des informations insuffisantes. Il faudrait connaître plus finement les caractéristiques de chaque opération, et sur une période de plus longue durée. Pour établir des comptes différents, il faudrait aussi connaître plus finement les caractéristiques de chaque opération.

La demande de brevet européen n° 172 573 décrit une machine à affranchir comportant trois mémoires. Une première mémoire, volatile, comporte :
- un registre ascendant stockant le montant total des opérations d'affranchissement;
- un registre descendant, contenant une valeur de crédit et permettant de contrôler l'exactitude de la valeur contenue dans le registre ascendant;
- et un registre contenant un code à redondance cyclique et des sommes de contrôle d'erreurs.

Lors de chaque opération d'affranchissement, un microprocesseur fait une soustraction de la valeur de l'opération d'affranchissement au contenu du registre descendant; fait une addition de cette même valeur au contenu du registre ascendant; puis inscrit le nouveau contenu du registre ascendant, le nouveau contenu du registre descendant, et éventuellement d'autres caractéristiques de l'opération, telles que le nombre total de plis affranchis, dans la première mémoire, à des emplacements fixés.

Il les inscrit en outre dans une deuxième mémoire, non volatile, à des emplacements successifs respectivement pour des opérations d'affranchissement successives. Cette deuxième mémoire est de type EEPROM et permet de stocker les caractéristiques des 128 dernières opérations d'affranchissement. Quand elle est pleine, les premières adresses de cette mémoire sont réutilisées. Cette mémoire stocke donc un historique qui ne concerne que les opérations d'affranchissement les plus récentes, en nombre trop petit pour établir des statistiques car il faut connaître les caractéristiques de chaque opération d'affranchissement sur une longue période, une année par exemple, sous peine d'obtenir des résultats non significatifs. D'autre part, elle ne mémorise pas la date.

Une troisième mémoire, non volatile CMOS, mémorise à des emplacements fixés, les valeurs cumulatives contenues dans le registre montant, le registre descendant, et éventuellement un registre de nombre de plis, lors d'une coupure d'alimentation, dans le but de sauvegarder ces informations cumulatives qui sont essentielles pour la facturation des opérations d'affranchissement. Puisqu'il ne s'agit que de valeurs cumulatives, il est totalement exclu d'établir des statistiques à partir de ces valeurs.

Dans le but de pouvoir établir des statistiques, il est envisageable de modifier une machine à affranchir telle que celle décrite dans la demande de brevet européen n° O 172 573, en augmentant le nombre d'opérations d'affranchissement prises en compte, et en augmentant le nombre de caractéristiques stockées pour chaque opération d'affranchissement. Il apparaît alors la nécessité d'utiliser une mémoire d'historique ayant une très grande capacité, pour pouvoir établir des statistiques sur une longue période. Cette très grande capacité entraînerait une augmentation importante du coût de la machine.

Dans le but d'établir un compte séparé pour chaque organisme postal ou pour chaque département d'une société, il est connu de mémoriser plusieurs compteurs ascendants et plusieurs compteurs descendants, au lieu d'un seul, dans une mémoire non volatile doublée par une mémoire de secours. Mais cette solution n'est pas très satisfaisante: soit elle conduit à prévoir une capacité de mémoire qui sera inutile pour la plupart des usagers, soit elle conduit à limiter le nombre de compteurs à une valeur trop petite pour certains usagers.

Selon le "IBM Technical Disclosure Bulletin", vol.25, no.11B, avril 1983, pages 6177 - 6178, le contenu d'une mémoire de travail volatile ("cache") n'est sauvegardé que lorsque le contenu de la mémoire CACHE a été changé par rapport au contenu d'une mémoire non-volatile ("Backing Store"). Mais ce processus vise à augmenter la vitesse de transfert de données entre deux mémoires, et à éviter - dans ce but - les transferts s'il n'y pas eu de changement du contenu. Il ne s'agit pas d'économiser la capacité de la mémoire non-volatile, et les transferts de données ne sont pas organisés de façon à réduire la taille de la mémoire requise.

EP-A-0 376 487 enseigne d'actualiser les registres d'une machine à affranchir une fois sur quinze si la valeur d'impression ne change pas, et d'actualiser les registres immédiatement si la valeur d'impression a changé (page 8, lignes 20 à 26; Figure 12). Mais le contenu des registres est seulement actualisé (c'est-à-dire remplacé par la nouvelle valeur). Les anciennes valeurs ne sont pas retenues - donc il n'y a pas d'historique, et le problème d'épuisement de la mémoire non-volatile ne se pose pas.

Le but de l'invention est de proposer une machine à affranchir permettant d'établir des statistiques, et de préférence d'établir des comptes séparés pour différents départements d'une société ou pour différents organismes postaux, sans avoir à augmenter notablement le coût de cette machine.

L'objet de l'invention est une machine à affranchir comportant une mémoire non volatile et des moyens pour inscrire dans cette mémoire des informations permettant de connaître des caractéristiques surveillées de toutes les opérations d'affranchissement réalisées pendant une longue période, ces caractéristiques surveillées portant notamment sur la date de l'opération d'affranchissement, la valeur monétaire de l'affranchissement, la mention postale utilisée pour cet affranchissement; qui est caractérisée en ce que les moyens pour inscrire des informations sont agencés de manière:
a) à ne pas inscrire d'informations dans la mémoire quand les caractéristiques surveillées de l'opération d'affranchissement courante ne sont pas différentes par rapport à l'opération d'affranchissement immédiatement précédente;
b) à inscrire des informations dans la mémoire quand au moins une des caractéristiques surveillées de l'opération d'affranchissement courante est différente par rapport à l'opération immédiatement précédente, ces informations enregistrées en mémoire étant représentatives de ladite caractéristique qui a changé entre deux opérations d'affranchissement et sont enregistrées dans la mémoire sous la forme de blocs de données de longueur fixe.

Par exemple, considérons le cas où l'usager réalise une série de cinq cents affranchissements ayant pour valeur 2,50F, puis commence une série d'affranchissements avec une autre valeur, par exemple, 3,40 F. Au moment où l'usager réalise le premier affranchissement de valeur 3,40 F les moyens pour inscrire des informations dans cette mémoire détectent ce changement de valeur et réalisent une inscription d'informations dans cette mémoire : Ils enregistrent un bloc d'informations indiquant la valeur de l'opération ou des opérations d'affranchissement qui viennent d'être réalisées, c'est-à-dire 2,50 F, et le nombre des opérations consécutives précédentes ayant pour valeur 2,50 F, c'est-à-dire 500 dans cet exemple. Sur cet exemple, il apparaît que la machine selon l'invention permet de prendre en compte dans des statistiques ou dans des comptes une longue série d'affranchissements, ayant une même valeur, en ne stockant qu'un seul bloc d'informations, ce qui réduit considérablement la capacité de mémoire nécessaire, par rapport à une mémoire où chaque opération d'affranchissement donnerait lieu à une inscription d'informations.

Pour établir des statistiques ou des comptes, en distinguant d'autres caractéristiques, il suffit d'inscrire dans la mémoire des blocs identifiant respectivement ces autres caractéristiques en vue de retrouver dans la mémoire d'historique les blocs indiquant les caractéristiques souhaitées. Par exemple, tous les affranchissements réalisés entre deux indications de type d'envoi, correspondent tous à un même type d'envoi, qui est indiqué au début de la série. Le nombre d'opérations d'affranchissement consécutifs appartenant à un même type d'envoi est indiqué dans le bloc d'informations indiquant la fin de la série et le début d'une autre.

Il en est de même pour établir des comptes ou des statistiques en distinguant différents départements d'une société, ou différents organismes postaux.

La machine selon l'invention permet donc de prendre en compte un grand nombre de caractéristiques, sans avoir à prévoir à l'avance un compteur pour chaque caractéristique. Il y a donc aussi une simplification de la réalisation, par rapport aux machines de types connus comportant un compteur pour chaque caractéristique, par exemple pour chaque département d'une société.

Les caractéristiques intéressantes pour établir des statistiques sont très diverses, et certaines ne sont peut-être pas encore connues, pour le moment. La longueur des informations à inscrire lors de chaque changement de l'une des caractéristiques des opérations d'affranchissement est donc variable, et même difficile à prévoir de manière absolument fixée. Par exemple, le nombre de chiffres exprimant la valeur d'un affranchissement et le nombre du chiffre exprimant le total cumulé des valeurs d'affranchissement varient beaucoup selon les pays où la machine est utilisée. La présence d'un code dans les blocs de données qui identifie une caractéristique particulière d'une opération d'affranchissement permet de régler le problème de formatage des informations stockées dans la mémoire non volatile.

La gestion de la mémoire non volatile est particulièrement simple puisqu'il suffit d'incrémenter régulièrement un pointeur d'adresse pour écrire ou pour lire un bloc de données. D'autre part, elle permet une grande souplesse dans le choix des caractéristiques interessantes, puisqu'il est possible de distinguer différents types d'informations au moyen du code indiquant le type de caractéristiques. Enfin, pour une caractéristique nécessitant une capacité de mémoire particulièrement importante, il est possible de fractionner ces informations en plusieurs blocs inscrits successivement dans la mémoire non volatile, le code du type d'informations permettant de repérer que ces blocs constituent un même ensemble d'informations à traiter globalement.

En relisant dans la mémoire d'historique la valeur d'affranchissement mémorisée pour une suite d'opérations identiques, et le nombre des opérations de cette suite, il est facile de calculer le montant total des opérations de cette suite. Le montant total de toutes les opérations quelconques réalisées depuis une première opération donnée est calculé en cumulant les montants. Malheureusement, une seule erreur sur les informations mémorisées peut fausser le calcul du montant total des opérations depuis une première opération donnée. Un autre but de l'invention est donc de remédier à cet inconvénient.

Selon une autre caractéristique, les moyens pour inscrire des informations fournissent, en outre, à cette mémoire, périodiquement, le montant total des opérations d'affranchissement.

Cette caractéristique permet de redéterminer la valeur exacte du montant total des opérations d'affranchissement, à partir d'une opération donnée, même si un ou plusieurs blocs d'informations sont affectés d'une erreur, pendant la période prise en compte. Ce montant total étant une valeur cruciale pour la facturation des opérations d'affranchissement, elle est ainsi protégée contre les conséquences d'une erreur affectant les informations traduisant les changements de valeur d'affranchissement, ou celles traduisant le nombre d'opérations d'affranchissement dans une suite ayant une valeur d'affranchissement donné.

L'invention sera mieux comprise et d'autres caractéristiques apparaîtront à l'aide de la description ci-dessous et des figures l'accompagnant :
- la figure 1 représente le schéma synoptique d'un exemple de réalisation d'une machine à affranchir selon l'invention;
- les figures 2 et 3 représentent respectivement les schémas synoptiques de deux variantes de cet exemple de réalisation.

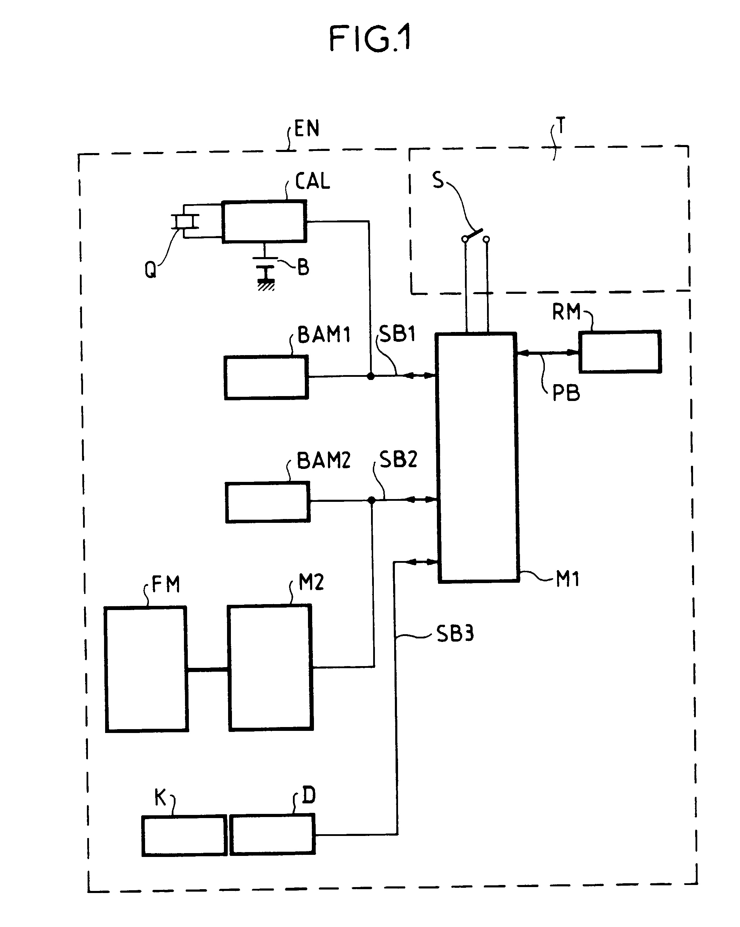

L'exemple de réalisation représenté sur la figure 1 comporte une enceinte protégée EN contenant les circuits électroniques qui doivent rester hors de portée de l'usager pour éviter des fraudes. Ces circuits électroniques comportent:
- un premier microprocesseur M1 réalisant des fonctions de commande de la machine à affranchir, selon un programme stocké dans une mémoire morte RM reliée au microprocesseur M1 par un bus parallèle PB;
- deux mémoires secourues par batterie, BAM1 et BAM2, contenant des registres classiques : un registre dit ascendant pour le montant total des opérations d'affranchissement, un registre descendant pour le crédit restant, et un registre mémorisant le nombre d'opérations d'affranchissement; ces trois registres étant dupliqués respectivement dans ces deux mémoires;
- un circuit calendrier CAL, associé à un quartz, et à une batterie de secours B;
- une mémoire d'historique, FM, non volatile, de type flash, associée à un second microprocesseur M2 qui est chargé de gérer l'adressage de la mémoire FM, et de mémoriser temporairement les blocs d'informations à stocker dans la mémoire FM;
- un clavier K associé à un afficheur D, permettant à un opérateur de donner des ordres à la machine à affranchir, et de lire des informations concernant le fonctionnement de celle-ci;
- un commutateur S placé dans une zone T de l'enceinte EN, accessible par une trappe plombée, pour permettre au personnel des organismes postaux de réaliser le rechargement d'un crédit dans le registre descendant, et la mise à l'heure et au jour du circuit calendrier CAL.

La trappe plombée empêche l'utilisateur de la machine d'accéder à ce commutateur S pour éviter toute fraude sur le crédit ou sur la date des affranchissements. La machine est créditée, et remise à l'heure en même temps, à intervalles réguliers, par exemple tous les six mois, par un membre du personnel d'un organisme postal. En plus de la trappe plombée, on peut prévoir un code numérique secret, à taper sur le clavier K, pour autoriser un crédit ou un changement de date et d'heure.

Un bus synchrone à transmission série, SB1, relie un port du microprocesseur M1 à une entrée de la mémoire BAM1 et à une entrée du circuit calendrier CAL. Un second bus synchrone à transmission série, SB2, relie un port du microprocesseur M1 à un port de la mémoire BAM2 et à un port du microprocesseur M2. Un troisième bus synchrone à transmission série, SB3, relie un port du microprocesseur M1 à un port de l'ensemble clavier K et afficheur D.

Les mémoires non volatiles BAM1 et BAM2 sont utilisées de manière classique. Lors de chaque opération d'affranchissement, le microprocesseur M1 met à jour le registre ascendant, le registre descendant, et le registre du nombre d'opérations, dans la mémoire BAM1. Puis il relit le contenu de cette mémoire pour vérifier que la mise à jour s'est déroulée correctement. Puis il réalise les mêmes mises à jour dans la mémoire BAM2. Enfin, il transmet au microprocesseur M2 toutes les informations constituant un bloc d'informations à inscrire dans la mémoire d'historique FM.

Le fait de brancher le circuit calendrier CAL en parallèle avec la mémoire BAM1 sur le bus SB1 ne nuit pas à la sécurité des informations stockées dans cette mémoire car le microprocesseur M1 lit la date, l'heure, et les minutes fournies par le circuit CAL peu fréquemment : seulement au moment de la mise sous tension, et au moment de la mise hors tension, de la machine à affranchir. Il est donc peu probable qu'une lecture du calendrier provoque une écriture accidentelle dans la mémoire BAM1.

Le microprocesseur M2 est associé à une mémoire de programme, non représentée, qui peut être une mémoire de type ROM, incorporée à ce microprocesseur M2. Le microprocesseur M2 accède à la mémoire d'historique FM à chaque changement d'un des paramètres d'affranchissement (valeur, date, coupure courant, etc...). C'est en effet à ce moment là que le microprocesseur M2 met à jour la mémoire d'historique FM en y inscrivant un certain nombre de blocs d'informations. Le micro-processeur M1 fournit au microprocesseur M2 un bloc d'informations chaque fois qu'il constate qu'au moins une caractéristique des opérations affranchissement est modifiée et le microprocesseur M2 inscrit ce bloc immédiatement dans la mémoire FM. La modification peut venir de l'utilisateur qui configure la machine par l'intermédiaire du clavier K. D'autre part, le micro-processeur M1 fournit au micro-processeur M2 : un bloc indiquant la date lors de la première mise sous-tension, chaque jour où la machine est utilisée; et un bloc indiquant l'heure, chaque fois que la machine est mise sous tension, et chaque fois qu'elle est mise hors tension.

La réalisation du programme exécuté par le microprocesseur M2, ainsi que celle du programme exécuté par le microprocesseur M1, est à la portée de l'Homme de l'Art.

La mémoire d'historique FM est une mémoire de type flash. Ce type de mémoire permet une forte capacité, est réinscriptible, et ne nécessite pas d'alimentation de secours. Cependant il a pour inconvénient de ne supporter qu'un nombre limité d'effacements, typiquement 10 000; et de ne permettre que l'effacement global, ou par page, d'un boîtier de mémoire. Dans cette application, une capacité de 128 kilo-octets, ou 256 kilo-octets, ou un mégaoctets peut être utilisée. Si l'on ne considère pas comme indispensable de conserver tout l'historique depuis la mise en service de la machine, il est possible d'effacer une partie de cet historique pour réutiliser les premières adresses de la mémoire d'historique. Il est alors nécessaire que la mémoire FM comporte au moins deux parties qui soient effaçables indépendamment.

Par exemple, la mémoire FM comporte 19 bits d'adresses et 8 bits de données. Pour utiliser cette mémoire, les informations sont organisées en blocs de quatre octets successifs. Une mémoire de 128 kilo-octets permet donc d'enregistrer 32 000 blocs. Chaque bloc de 32 bits comporte:
- un champ de 4 bits désignant le type des informations contenues dans le bloc;
- un champ de 23 bits contenant les informations elles-mêmes;
- un champ de 5 bits contenant un code correcteur d'erreurs résultant de l'utilisation du polynôme de Hamming x⁵ + x² + 1, appliqué à l'ensemble du bloc.

Il est à la portée de l'Homme de l'Art de réaliser un programme de détection d'erreur exploitant le champ de 5 bits, et exécutable par le microprocesseur M2. Ce type de détection d'erreur est utilisé classiquement pour des données stockées dans des cartes à puce.

Les différentes types d'informations sont les suivants, selon la valeur hexadécimale du champ désignant le type d'informations :
- O désigne un bloc invalidé. Avant d'inscrire des informations dans un bloc, le microprocesseur M2 vérifie que tous les bits de ce bloc sont bien effacés. Si un seul bit est mal effacé, alors le bloc est invalidé en inscrivant la valeur O dans le champ type d'informations. Ce procédé améliore la protection des informations contre les erreurs et permet même d'utiliser une mémoire flash au-delà des 10 000 effacements garantis par le constructeur.
- 1 désigne la date. Le bloc contient la date complète, c'est-à-dire le jour, le mois, et l'année. Ce bloc est créé à la suite de la première opération d'affranchissement qui suit la première mise sous-tension, dans une journée donnée;
- 2 désigne une valeur courte, c'est-à-dire une valeur d'affranchissement qui est représentable par 14 bits, les neuf autres bits mémorisant le nombre d'opérations d'affranchissement réalisées pour la valeur stockée dans les 14 bits précédents. La valeur d'affranchissement peut alors être comprise entre 0 et 8191, et le nombre d'opérations peut être compris entre 1 et 511. Ce type de bloc correspond aux affranchissements les plus courants, car leurs valeurs utilisent 3 ou 4 chiffres.
- 3 désigne une valeur longue, c'est-à-dire une valeur d'affranchissement représentée par 17 bits et qui peut être comprise entre 0 et 99999. Les 6 bits d'informations suivant contiennent le nombre d'opérations d'affranchissement réalisées successivement pour la valeur stockée dans les 17 bits précédents. Le nombre maximal d'opérations est donc égal à 64.
- 4 désigne une mention particulière. Le bloc enregistre tout changement dans le type d'envoi : publicité, lettres, paquets, etc.
- 5 désigne l'heure. Le bloc contient l'heure et les minutes, enregistrées à chaque mise sous tension et à chaque mise hors tension, pour une même date, ce qui est intéressant pour connaître la durée d'utilisation d'une machine.
- 6 désigne un défaut. Le bloc mémorise l'apparition d'un défaut dans le fonctionnement de la machine, en enregistrant l'heure et les minutes, ce qui permet de connaître l'historique de l'apparition des défauts et des pannes sur la machine.
- 7 désigne le total, c'est-à-dire le contenu du registre ascendant. Le bloc enregistre la valeur totale de tous les affranchissements réalisés depuis la mise en service de la machine, en cumulant tout les types d'opérations, quelle que soit la valeur d'affranchissement. Un tel bloc permet de recaler la valeur du total dans le cas où la valeur calculée à partir des informations de changement serait erronée à la suite d'une erreur affectant l'un des blocs d'informations.
- 8 désigne le chargement d'un crédit. Le bloc enregistre un rechargement de crédit effectué dans le compteur descendant.
- 9 désigne un bloc d'extension. Le bloc contient des informations qui sont une extension des informations du bloc précédent. Ce type de bloc est utilisé lorsque la quantité d'informations à inscrire dans un bloc est supérieure aux 23 bits disponibles dans un bloc unique.
- F désigne un bloc vide. Le bloc ne contient aucun enregistrement et son effacement est parfait.

Les codes A à E sont disponibles pour stocker éventuellement d'autres types d'informations pouvant être utiles pour établir des statistiques ou des factures. Par exemple, l'identité d'un organisme postal, ou d'un département de la société utilisant la machine.

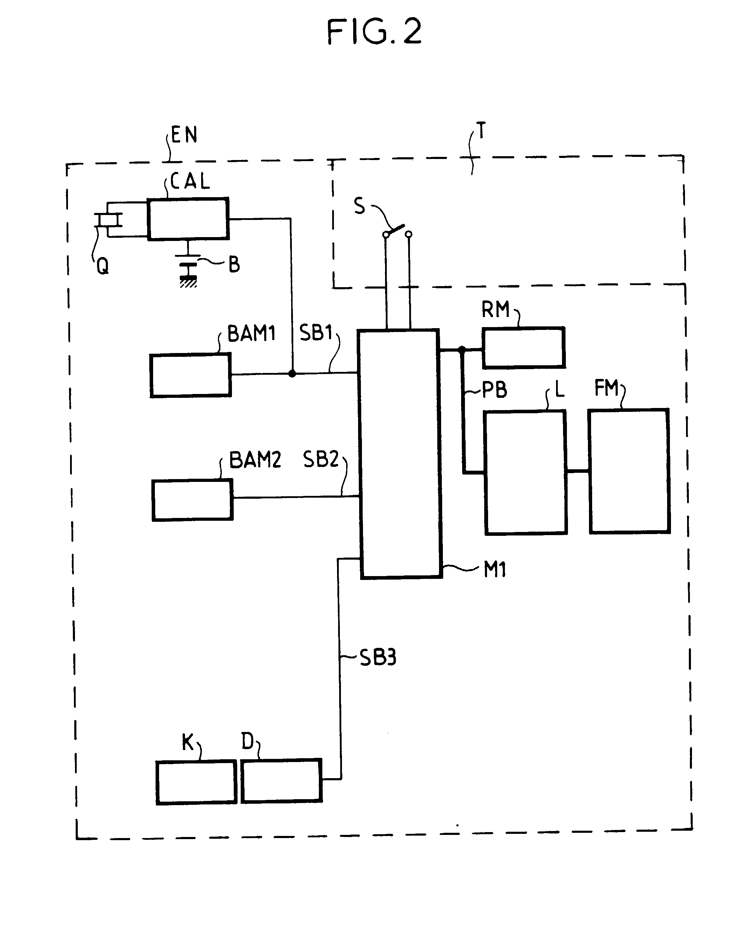

La figure 2 représente le schéma synoptique d'une variante de cet exemple de réalisation. Selon cette variante, la mémoire d'historique FM n'est pas reliée au bus SB3. Seul le clavier K et l'afficheur D utilisent le bus SB3. La mémoire FM est reliée au bus parallèle PB par l'intermédiaire d'un circuit logique, L, pour démultiplexer et mémoriser chaque adresse envoyée par le microprocesseur M1 à la mémoire FM. Le circuit L reçoit une adresse de 19 bits sous la forme de 3 octets successifs et il la restitue sous la forme d'un mot binaire de 19 bits qui est utilisable comme adresse pour la mémoire d'historique FM. Le microprocesseur M2 étant supprimé, c'est le microprocesseur M1 qui inscrit les blocs d'informations dans la mémoire FM. A la mise hors tension, le microprocesseur M1 inscrit dans la mémoire FM un bloc "heure". Pour une machine restant en permanence sous-tension, le microprocesseur M1 inscrit dans la mémoire FM un bloc d'informations à chaque changement d'un des paramètres surveillés. Le circuit L ne fait que transmettre les blocs sans les modifier.

Le circuit L peut être constitué d'un réseau de portes logiques programmable, ou bien il peut être conçu à la demande et intégré dans la même puce que le microprocesseur M1.

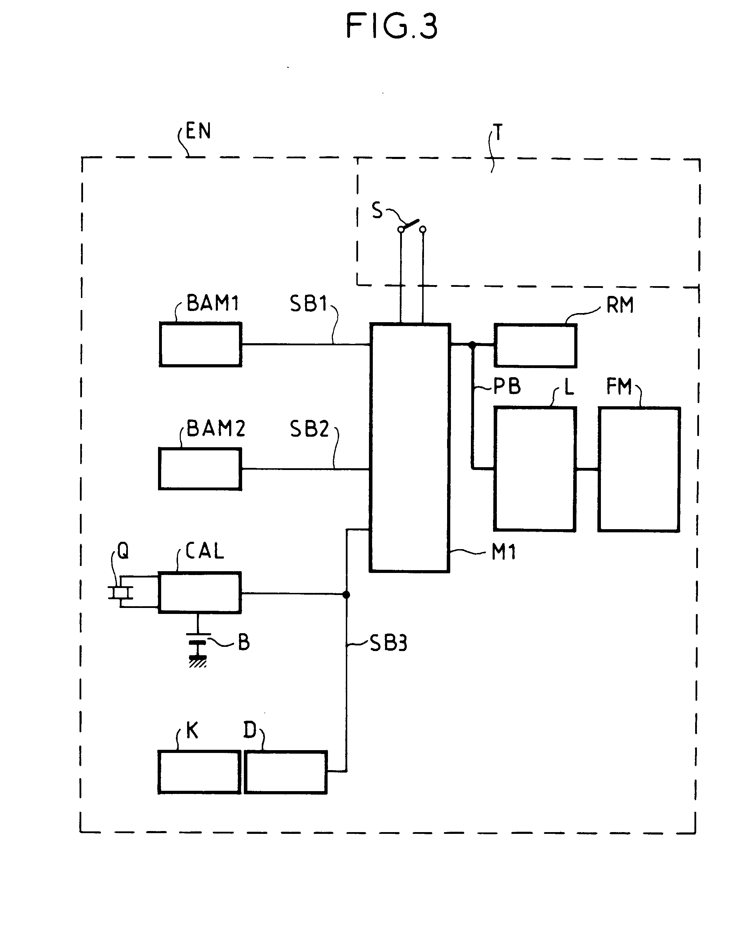

La figure 3 représente le schéma synoptique d'une variante de cet exemple de réalisation. Dans cette variante, les deux bus SB1 et SB2 sont utilisés exclusivement pour les opérations de lecture et d'écriture dans les mémoires BAM1 et BAM2 respectivement. Ceci augmente encore la sécurité des informations stockées dans ces mémoires. Le circuit de calendrier CAL est relié en parallèle avec le clavier K et l'afficheur D, sur le bus SB3. La mémoire d'historique FM est reliée au bus parallèle PB par l'intermédiaire d'un circuit logique L, pour multiplexer et verrouiller les adresses fournies par le microprocesseur M1 sur le bus parallèle PB, comme dans la variante représenté sur la figure 2.

Les informations stockées dans la mémoire FM peuvent être lues en branchant une interface de bus série, sur le bus SB2, pour l'exemple représenté sur la figure 1; et en branchant une interface de bus parallèle, sur le bus PB, pour les variantes représentées sur les figures 2 et 3. Des moyens de calcul simples, dont la réalisation est à la portée de l'Homme de l'Art, peuvent exploiter ces informations pour établir des statistiques ou des factures détaillées.

La présence d'un circuit calendrier protégé contre la fraude permet d'établir des statistiques en fonction de la date réelle et permet d'établir des factures détaillées jour par jour. Naturellement, si la date réelle n'est pas considérée comme nécessaire, la réalisation peut être simplifiée en supprimant le circuit calendrier. Ce dernier peut être réalisé sous la forme d'une carte embrochable optionnellement.

## Revendications

1. Une machine à affranchir comportant une mémoire non volatile (FM) et des moyens (M1,M2) pour inscrire dans cette mémoire des informations permettant de connaître des caractéristiques surveillées de toutes les opérations d'affranchissement réalisées pendant une longue période, ces caractéristiques surveillées portant notamment sur la date de l'opération d'affranchissement, la valeur monétaire de l'affranchissement, la mention postale utilisée pour cet affranchissement; qui est caractérisée en ce que les moyens pour inscrire des informations sont agencés de manière:
a) à ne pas inscrire d'informations dans la mémoire quand les caractéristiques surveillées de l'opération d'affranchissement courante ne sont pas différentes par rapport à l'opération d'affranchissement immédiatement précédente;
b) à inscrire des informations dans la mémoire quand au moins une des caractéristiques surveillées de l'opération d'affranchissement courante est différente par rapport à l'opération immédiatement précédente, ces informations enregistrées en mémoire étant représentatives de ladite caractéristique qui a changé entre deux opérations d'affranchissement et sont enregistrées dans la mémoire sous la forme de blocs de données de longueur fixe.

2. La machine selon la revendication 1, dans laquelle les moyens (M2) pour inscrire des informations fournissent, en outre, à cette mémoire (FM), périodiquement, le montant total des opérations d'affranchissement.

3. La machine selon l'une des revendications précédentes, dans laquelle chaque bloc de données inclut un code représentatif de ladite caractéristique de l'opération d'affranchissement.

4. La machine selon l'une des revendications précédentes, dans laquelle la mémoire est une mémoire flash.

## Patentansprüche

1. Frankiermaschine mit einem nicht-flüchtigen Speicher (FM) und mit Mitteln (M1, M2), um in diesen Speicher Informationen einzutragen, die ausgewählte Merkmale aller während einer langen Periode durchgeführten Frankieroperationen zu kennen erlauben und insbesondere das Datum der Frankieroperation, den Geldwert der Frankieroperation und den für diese Frankieroperation verwendeten Postvermerk betreffen, dadurch gekennzeichnet, daß die Mittel zum Eintragen der Informationen so ausgebildet sind,
a) daß keine Informationen in den Speicher eingetragen werden, wenn die ausgewählten Merkmale der laufenden Frankieroperationen sich nicht von denen der unmittelbar vorhergehenden Frankieroperation unterscheiden,
b) daß Informationen in den Speicher eingetragen werden, wenn mindestens eines der ausgewählten Merkmale der laufenden Frankieroperation sich von dem der unmittelbar vorhergehenden Frankieroperation unterscheidet, wobei diese gespeicherten Informationen für das zwischen zwei Frankieroperationen geänderte Merkmale repräsentativ sind und im Speicher in Form von Datenlängen konstanter Länge gespeichert werden.

2. Maschine nach Anspruch 1, in der die Mittel (M2) zum Eintragen der Informationen außerdem diesem Speicher (FM) periodisch den Gesamtbetrag der Frankieroperationen liefern.

3. Maschine nach einem der vorhergehenden Ansprüche, in der jeder Block von Daten einen Kode enthält, der für das ausgewählte Merkmal der Frankieroperation charakteristisch ist.

4. Maschine nach einem der vorhergehenden Ansprüche, in der der Speicher ein sogenannter Flash-Speicher ist.

## Claims

1. Franking machine comprising a non-volatile memory (FM) and means (M1, M2) for writing into said memory information indicating monitored characteristics of all franking operations carried out during a long period of time, said monitored characteristics including in particular, the date of the franking operation, the monetary value of the franking operation and the postal service used for said franking operation, the machine being characterized in that the means for writing information are adapted:
a) not to write information into the memory if the monitored characteristics of the current franking operation are not different from those of the immediately preceding franking operation, and
b) to write information into the memory if at least one monitored characteristic of the current franking operation differs from that of the immediately preceding franking operation, the information stored in the memory being representative of said characteristic which has changed between two franking operations and being stored in the memory in the form of fixed length data blocks.

2. Machine according to claim 1 wherein the means (M2) for writing information further supply the total amount for franking operations to said memory (FM) at periodic intervals.

3. Machine according to any preceding claim wherein each data block includes a code representative of said characteristics of the franking operation.

4. Machine according to any preceding claim wherein said memory is a flash memory.
